(19) Europäisches Patentamt
European Patent Office
Office européen des brevets

(11) **EP 2 696 304 A1**

(12) **EUROPEAN PATENT APPLICATION**
published in accordance with Art. 153(4) EPC

(43) Date of publication:
**12.02.2014 Bulletin 2014/07**

(51) Int Cl.:
***G06F 21/00*** *(2013.01)*

(21) Application number: **12825035.4**

(22) Date of filing: **07.06.2012**

(86) International application number:
**PCT/CN2012/076594**

(87) International publication number:
**WO 2013/026304 (28.02.2013 Gazette 2013/09)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.08.2011 CN 201110243121**

(71) Applicant: **Tencent Technology (Shenzhen)
Company Limited
Guangdong 518000 (CN)**

(72) Inventor: **WANG, Hongbin
Shenzhen,
Guangdong 518000 (CN)**

(74) Representative: **Gunzelmann, Rainer
Wuesthoff & Wuesthoff
Patent- und Rechtsanwälte
Schweigerstraße 2
81541 München (DE)**

(54) **METHOD AND SERVER FOR DISCRIMINATING MALICIOUS ATTRIBUTE OF PROGRAM**

(57)    The present disclosure provides a method and a server for discriminating a malicious attribute of a program. The method includes: acquiring action data of a program at a client (101); acquiring a malicious action and a malicious action value of the program according to the action data of the program and the sample data stored locally (102), wherein the sample data includes a malicious program sample set and a non-malicious program sample set, and the malicious action value reflects a malicious degree of the malicious action; determining a malicious attribute of the program according to the malicious action and/or the malicious action value of the program (103). The provided method and server can determine the malicious attribute of a report file which does not have the same sample in the background.

Fig. 1

100 — Acquiring a malicious action set according to the sample data stored locally (optionally)

101 — Acquiring action data of a program at a client

102 — Acquiring a malicious action and a malicious action value of the program according to the action data of the program and the sample data stored locally

103 — Determining a malicious attribute of the program according to the malicious action and/or malicious action value of the program

**Description**

**PRIORITY DECLARATION**

The present disclosure claims priority to the Chinese patent application No. 2011102431215, entitled "METHOD AND SERVER FOR DISCRIMINATING MALICIOUS ATTRIBUTE OF PROGRAM" filed on August 23, 2011, the applicant is Tencent Technology (Shenzhen) Co., Ltd. The full text of the application is expressly incorporated by reference herein.

**TECHNICAL FIELD**

The present disclosure relates to the field of internet communication, and in particular to a method and a server for discriminating a malicious attribute of a program.

**BACKGROUND**

In the existing virus scanning programs, such as the Trojan cloud security function of the computer manager, only about 20% of the independent report files (the independent report files refer to the mutually different files which are reported from the client and are killed) can determine the black and white attributes. In the remaining 80% of the independent report files, 50% of the files are grey independent report files, i.e. the same sample of the files is stored in the virus scanning background, but whether the attribute is black or white (i.e. whether the file is a virus file) is not determined by scanning via the antivirus software; the remaining 30% of the independent report files do not have the same sample file in the virus scanning background, and cannot implement scanning of the antivirus software set to determine the attribute.

From the above description, it can see that the current Trojan cloud security technology collects the suspicious Portable Execute (pe) files uploaded by the users participating the tolerance plan, and scans the suspicious pe files by the antivirus software, so as to acquire the black, white and grey attributes of the pe files to be scanned according to the previously designated scanning rules.

However, the disadvantage of the method is that: if no corresponding sample of the report file exists in the background, the black, white and grey attributes cannot be acquired when the user implements cloud scanning; although another part of pe files exist in the background, the black, white and grey attributes of the files cannot be acquired via the existing scanning model.

**SUMMARY**

The technical problem to be solved by the embodiment of the present disclosure is to provide a method and a server for discriminating a malicious attribute of a program, capable of discriminating the malicious attribute of the report files without the same sample in the background.

In order to solve the above technical problem, the embodiment of the present disclosure provides a method for discriminating the malicious attribute of the program, including: acquiring action data of the program at a client; acquiring a malicious action and a malicious action value of the program according to the action data of the program and the sample data stored locally, wherein the sample data includes a malicious program sample set and a non-malicious program sample set, and the malicious action value reflects a malicious degree of the malicious action; determining a malicious attribute of the program according to the malicious action and/or the malicious action value of the program.

Correspondingly, the embodiment of the present disclosure also provides a server for discriminating the malicious attribute of the program, including: a customer data acquisition unit, configured to acquire action data of the program at a client; an action data acquisition unit, configured to acquire a malicious action and a malicious action value of the program according to the action data of the program and the sample data stored locally, wherein the sample data includes a malicious program sample set and a non-malicious program sample set, and the malicious action value reflects a malicious degree of the malicious action; a determination unit, configured to determine the malicious attribute of the program according to the malicious action and/or malicious action value of the program.

In the embodiment of the present disclosure, the action data of the program is acquired, and then it is determined which actions are malicious actions according to other sample data in the background, so as determine the malicious attribute of the program. Therefore, the embodiment of the present disclosure can determine the malicious attribute of the program in the case that the background does not have the same sample, and thereby improving the virus scanning efficiency of the system.

**BRIEF DESCRIPTION OF THE DRAWINGS**

In order to describe the embodiments of the present disclosure or the technical solutions in the prior art more clearly, the drawings required for describing the embodiments of the present disclosure or prior art are briefly introduced below. Obviously, the drawings in the following description are only some embodiments of the present disclosure, for persons ordinary skilled in the art, other drawings can also be obtained according to these drawings without any inventive work.

Fig. 1 shows a specific flow diagram of a method for discriminating a malicious attribute of a program according to an embodiment of the present disclosure;

Fig. 2 shows a specific flow diagram of discriminating a malicious attribute of a program according to an embodiment of the present disclosure;

Fig. 3 shows a structural diagram of a server for discriminating a malicious attribute of a program in according to an embodiment of the present disclosure;

Fig. 4 shows another structural diagram of a server for discriminating a malicious attribute of a program according to an embodiment of the present disclosure.

**DETAILED DESCRIPTION**

The technical solutions in the embodiments of the present disclosure will be clearly and completely described below with reference to the drawings in the embodiments of the present disclosure. It should be appreciated that the described embodiments are only part of the embodiments of the present disclosure, instead of all embodiments. Based on the embodiments provided in the present disclosure, all other embodiments, which can be anticipated by persons of ordinary skilled in the art without any inventive work, should also fall within the scope of the present disclosure.

In the embodiment of the present disclosure, the action data of the program generated at the client is acquired. Meanwhile, in the existing program samples of the virus scanning background, various malicious actions and malicious action values are defined according to the existing sample. After the action data of the program sent from the client is acquired, it can be determined whether there is a malicious action in the program and the malicious action value of the malicious action, and thereby realizing the determination of the malicious attribute of the program.

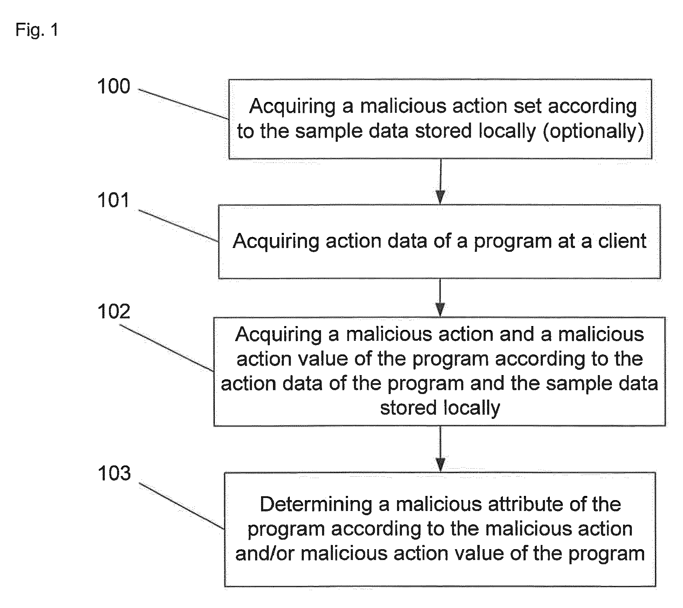

As shown in Fig. 1, a method for discriminating the malicious attribute of the program in the embodiment of the present disclosure includes the following steps:

Step 100, acquiring a malicious action set according to the sample data stored locally, and acquiring a malicious action value of the malicious action in the malicious action set. This step is optional, i.e. the system can define which actions are the malicious actions, and can define the malicious degree of the malicious actions according to the sample data in advance.

This step is a sample training process, which can specifically adopt a plurality of sample training modes to determine the malicious action, such as the weighting method. The embodiment of the present disclosure also provides a specific sample training mode , as described below.

First: in the training process, it is determined whether the attribute of each user action is malicious or normal. There are many methods for extracting the actions with positive and negative attributes: extraction based on frequency, chi-squared statistics, information gain or the like. These methods are originally used in the text filtering, for example, some specific embodiments of the present disclosure use the idea of the feature extraction algorithm: the generality of all methods is to extract the user action which can best represent a certain category. Based on the same principle, the embodiment of the present disclosure can extract the actions with different attributes based on the frequency difference that the specified action appears in the malicious sample set and the normal sample set, and different feature extraction methods may be adopted subsequently.

Second: scoring for each of the malicious actions. The scoring method is to preliminary acquire the score of the action according to the frequency difference of one user action appearing in the malicious pe file and the normal pe file. Namely, when it is determined that the number of samples in the malicious program sample set (the programs in this set have been determined as the malicious programs) and the non-malicious program sample set (the programs in this set have been determined as the non-malicious programs) is the same, then it can be determined whether the action is the malicious action according to the formula (1), and the malicious index $Action_{evil}^{i}$ of the malicious action can also be acquired.

$$Action_{evil}^{i}=(Action_{pos}^{i}-Action_{neg}^{i})\ (1)$$

Where, $Action_{pos}^{i}$ represents the frequency of occurrence of the action i in the malicious program sample set, $Action_{neg}^{i}$ represents the frequency of occurrence of the action i in the non-malicious program sample set; the action i is determined to be the malicious action when the malicious index $Action_{evil}^{i}$ of the action i is greater than a preset threshold. Thus, a malicious action set can be formed by determining all the actions in the sample data, and acquiring all the malicious actions; the malicious action also can be assigned to acquire the malicious action value, this action value is set according to the malicious degree.

The principle of the above method is that, the larger the difference of frequency of generating a certain client action in the two sets is, the higher the probability of the client action appearing in the malicious program sample set is, and the more dangerous the action is proved to be, so the action has high risk.

The malicious action value also can be continuously updated. That is, in the testing process, the filtering threshold of the malicious sample is determined.

First: the initial filtering threshold can be determined by adopting the method specified in the embodiment of the disclosure to score for all the training samples, and determining the sum of the malicious action values of all the training samples. Sequentially specifying an initial filtering threshold, the sample is determined to be the black sample when the sum of the scores of the malicious action of one sample exceeds the specified threshold of the training sample during testing.

Second: the methods in the embodiment of the present disclosure have excellent expansibility. When a new malicious action is determined, the malicious action can be added to the malicious action library, and an initial value is specified. And then the score of the action is determined by relearning. For example, the following specific learning process is adopted.

Randomly extracting 100 files which have the user actions to be scored, the new score of a certain action is equal to the product of the original score and the rate of change. The rate of change can be both positive and negative numbers. If the proportion of scanning black samples from the 100 files today is greater than the proportion of yesterday, the rate of change is a positive number; otherwise, if the black scanning rate is continuously reduced, it can be considered that the malicious rate of the action is gradually reduced, the rate of change is a negative number. Through long-term operations, an appropriate score can be made for each of the malicious actions, and can finally tend to be stable.

Third: in order to achieve a better learning purpose, different user action classification methods and scoring strategies can be adopted to implement learning, and the method with better filtering effect will be adopted.

For example, the malicious action is determined according to the following formulas (2) and (3):

$$score_{new}^{i}=score_{old}^{i}*(1+rate^{i})\ (2)$$

$$rate^{i}=IsBlack_{today\_rate}^{i}-IsBlack_{yesterday\_rate}^{i}\ (3)$$

where, $score_{new}^{i}$ represents a new malicious action value of the malicious action i, $score_{old}^{i}$ represents the existing malicious action value of the malicious action i, $rate^{i}$ represents the rate of change of the malicious action i, $IsBlack_{today\_rate}^{i}$ represents the percentage of malicious action of the malicious action i recorded currently (for example, recorded today), $IsBlack_{yesterday\_rate}^{i}$ represents the percentage of malicious action of the malicious action i recorded previously (for example, recorded yesterday).

Generally, if in the top ten of the files that are scanned to have malicious action i, the sample proportion (also named as black scanning rate) of the files being the malicious files (black files) is greater than that of yesterday, the rate of change of the malicious action i is a positive number; otherwise, if the black scanning rate is continuously reduced, it can be considered that the malicious rate of the action is gradually reduced, the rate of change of the malicious action i is a negative number.

In addition, the above method not only can extract the malicious action, but also can score for the white actions; if the sum of the scores of the white attributes of the files to be determined exceeds a certain threshold, the file is determined to be white. And during the actual use, the discrimination strategy of the malicious action and the threshold during the discrimination can be continuously updated.

Step 101, acquiring the action data of the program at the client. The action data can only include the identification of the action which has been defined by the system, and also can include various descriptions of the action.

Step 102, acquiring the malicious action and the malicious action value of the program according to the action data of the program and the sample data stored locally, wherein,the sample data includes the malicious program sample set and the non-malicious program sample set, the malicious action value reflects the malicious degree of the malicious action.

Step 103, determining the malicious attribute of the program according to the malicious action and/or malicious action value of the program. Certainly, in this step, the malicious attribute of the program is determined only by determining whether the program includes the malicious action; once there is a malicious action or a specific malicious action, the program is determined to be the malicious program. Thus, in the preceding steps, the determination can be made once the malicious action of the program is acquired. However, such determination is relatively rough. The determination also can be implemented according to the following modes.

When any of the malicious action values of the program is greater than the high-risk threshold, the program is determined to be the malicious program; for example, if a program allows the operations such as remote control or direct modification of the domain name files, then the program can be directly determined to be the malicious program.

When no malicious action value of the program is greater than the high-risk threshold, but the sum of the malicious action values of all the malicious actions of the program is greater than the total malicious threshold, the program is determined to be the malicious program.

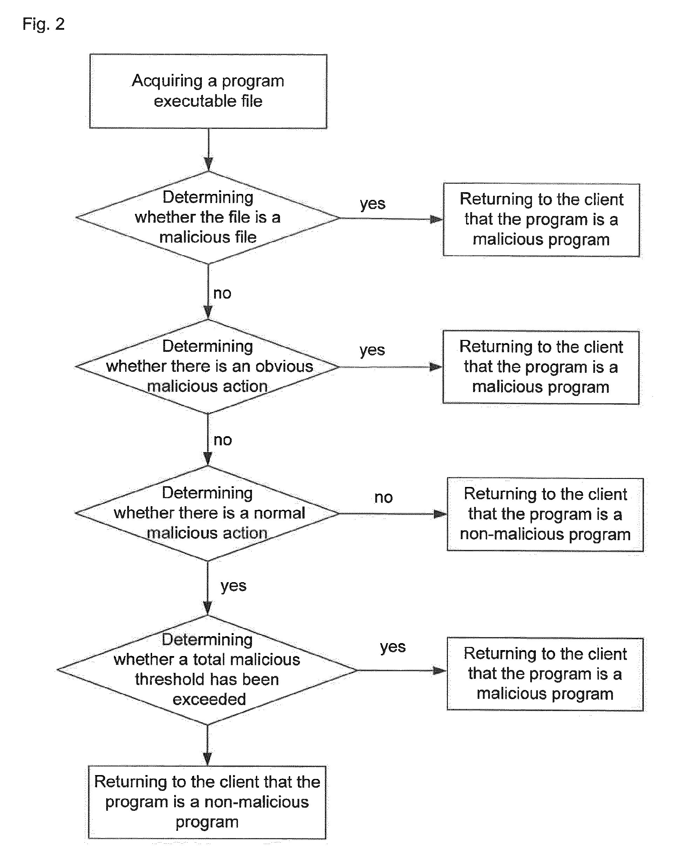

As shown in Fig. 2, the process of determining the program attribute according to the above threshold may include: acquiring the program executable file, and determining whether the file is a malicious file; if yes, returning to the client that the program is a malicious program; if not, determining whether there is an obvious malicious action, if there is, returning to the client that the program is a malicious program; otherwise, determining whether there is a normal malicious action, i.e. determining whether any of the malicious action values of the program is greater than the high-risk threshold, if there is a normal malicious action, returning to the client that the program is a malicious program, otherwise, determining whether the total malicious threshold has been exceeded, i.e. determining whether the sum of the malicious action values of all the malicious actions of the program is greater than the total malicious threshold; if the total malicious threshold has been exceeded, returning to the client that the program is a malicious program; otherwise, returning to the client that the program is a non-malicious program. It can understand that all the thresholds can be adjusted according to the actual situations.

The above method in this embodiment can be used as a supplement for the existing cloud killing, i.e. for the program which has the same sample in the background, the attribute of the program can be directly determined according to the attribute of the sample. However, for the program which does not have the same sample in the background, the attribute of the program can be determined according to the above method. Therefore, this method can be used for a cloud engine virus scanning system.

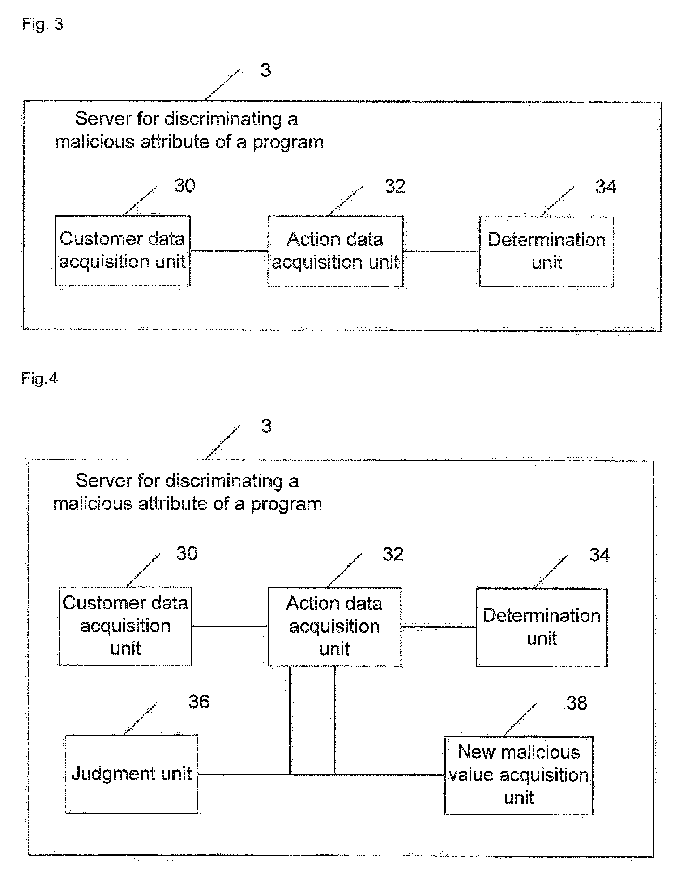

Correspondingly, the embodiment of the present disclosure also provides a server for discriminating the malicious attribute of the program, as shown in Fig. 3, the server 3 includes: a customer data acquisition unit 30, configured to acquire the action data of the program at the client; an action data acquisition unit 32, configured to acquire the malicious action and the malicious action value of the program according to the action data of the program and the sample data stored locally, wherein the sample data includes the malicious program sample set and the non-malicious program sample set, the malicious action value reflects the malicious degree of the malicious action; a determination unit 34, configured to determine the malicious attribute of the program according to the malicious action and/or malicious action value of the program.

Wherein the determination unit 34 is further configured to determine that the program is a malicious program when any of the malicious action values of the program is greater than the high-risk threshold, and determine that the program is a malicious program when no malicious action value of the program is greater than the high-risk threshold, but the sum of the malicious action values of all the malicious actions of the program is greater than the total malicious threshold.

As shown in Fig. 4, the server 3 can further include an action judgement unit 36, configured to judge which actions of the existing actions are the malicious actions according to the samples in the malicious program sample set and the non-malicious program sample set in the sample data, or the malicious action value may also be included.

If the number of the samples in the malicious program sample set and the non-malicious program sample set of the sample data is the same, the judgement unit 36 also can be configured to acquire the malicious index $\text{Action}_{evil}^{i}$ of the action according to the samples in the malicious program sample set and the non-malicious program sample set in the sample date and the formula (1).

As shown in Fig. 4, the server 3 also can further include a new malicious action value acquisition unit 38, configured to acquire the new malicious action value according to the existing malicious action value; the malicious action value is determined according to the above formulas (2) and (3), where, $\text{score}_{new}^{i}$ represents a new malicious action value of the malicious action i, $\text{score}_{old}^{i}$ represents the existing malicious action value of the malicious action i, $\text{rate}^{i}$ represents the rate of change of the malicious action, $\text{IsBlack}_{today\_rate}^{i}$ represents the percentage of malicious action of the malicious action i recorded currently, $\text{IsBlack}_{yesterday\_rate}^{i}$ represents the percentage of malicious action of the malicious action i recorded previously.

In the embodiment of the disclosure, though acquiring the action data of the program, and determining which actions of the program are the malicious actions according to the other sample data in the background, and thus the malicious attribute of the program can be determined. Therefore, the embodiment of the present disclosure can determine the malicious attribute of the program in the case that the background does not have the same sample, thus the virus scanning efficiency of the system can be improved.

Those of ordinarily skilled in the art should be appreciated that all or part of the flows in the above exemplary embodiment can be accomplished by instructing relevant hardware through a computer program. The program can be stored in a computer-readable storage medium. When the program is executed, the flows of the embodiment of each method can be included. The storage medium can be a disk, a compact disk, a Read-Only Memory (ROM), a Random Access Memory (RAM) or the like. The above is only the preferred embodiment of the present disclosure and not intended to limit the scope of the present disclosure. Any equivalent variations according to the claims of the present disclosure should be within the scope of the present disclosure.

**Claims**

1.  A method for discriminating a malicious attribute of a program, wherein the method comprises:

    acquiring action data of the program at a client;
    acquiring a malicious action and a malicious action value of the program according to the action data of the program and the sample data stored locally, wherein the sample data includes a malicious program sample set and a non-malicious program sample set, and the malicious action value reflects a malicious degree of the malicious action;
    determining a malicious attribute of the program according to the malicious action and/or the malicious action value of the program.

2.  The method according to claim 1, wherein the method also comprises:

    acquiring a malicious action set according to the sample data stored locally, and acquiring a malicious action value of a malicious action in the malicious action set.

3.  The method according to claim 2, wherein the numbers of samples in the malicious program sample set and the non-malicious program sample set in the sample data are the same, the malicious action is selected according to the following formula: $Action_{evil}^i=(Action_{pos}^i-Action_{neg}^i)$, $Action_{pos}^i$ represents the frequency of occurrence of an action i in the malicious program sample set, $Action_{neg}^i$ represents the frequency of occurrence of the action i in the non-malicious program sample set, the action i is determined to be the malicious action when $Action_{evil}^i$ is greater than a preset threshold.

4.  The method according to claim 2, wherein, the malicious action value is determined according to the following formula: $score_{new}^i=score_{old}^i*(1+rate^i)$, $rate^i=IsBlack_{today\_rate}^i-IsBlack_{yesterday\_rate}^i$;
    where, $score_{new}^i$ represents a new malicious action value of the malicious action i, $score_{old}^i$ represents the existing malicious action value of the malicious action i, $rate^i$ represents the rate of change of the malicious action i, $IsBlack_{today\_rate}^i$ represents the percentage of malicious action of the malicious action i recorded currently, $IsBlack_{yesterday\_rate}^i$ represents the percentage of malicious action of the malicious action i recorded previously.

5.  The method according to any one of claims 1 to 4, wherein the step of determining the malicious attribute of the program according to the malicious action  and/or the malicious action value of the program comprises:

    determining that the program is a malicious program when any of the malicious action values of the program is greater than a high-risk threshold;
    determining that the program is a malicious program when no malicious action value of the program is greater than the high-risk threshold, but the sum of the malicious action values of all the malicious actions of the program is greater than a total malicious threshold.

6.  The method according to any one of claims 1 to 4, wherein the method is used in a cloud engine virus scanning system.

7.  A server for discriminating a malicious attribute of a program, wherein the server comprises:

a customer data acquisition unit, configured to acquire action data of the program at a client;

an action data acquisition unit, configured to acquire a malicious action and a malicious action value of the program according to the action data of the program and the sample data stored locally, wherein the sample data includes a malicious program sample set and a non-malicious program sample set, and the malicious action value reflects a malicious degree of the malicious action;

a determination unit, configured to determine the malicious attribute of the program according to the malicious action and/or malicious action value of the program.

8. The server according to claim 7, wherein the numbers of samples in the malicious program sample set and the non-malicious program sample set in the sample data are the same, and the server further comprises an action judgement unit configured to acquire a malicious index of the action according to the samples in the malicious program sample set and the non-malicious program sample set in the sample data and the following formula: $\text{Action}_{evil}^i = (\text{Action}_{pos}^i - \text{Action}_{neg}^i)$, where, $\text{Action}_{pos}^i$ represents the frequency of occurrence of the action i in the malicious program sample set, $\text{Action}_{neg}^i$ represents the frequency of occurrence of the action i in the non-malicious program sample set, and $\text{Action}_{evil}^i$ represents the malicious index;

the action judgement unit is configured to determine that the action i is the malicious action when $\text{Action}_{evil}^i$ is greater than a preset threshold.

9. The server according to claim 7, wherein the server further comprises a new malicious action value acquisition unit, configured to acquire a new malicious action value according to the existing malicious action value, the malicious action value is determined according to the following formula:

$$\text{score}_{new}^i = \text{score}_{old}^i {}^* (1 + \text{rate}^i)$$

$$\text{rate}^i = \text{IsBlack}_{today\_rate}^i - \text{IsBlack}_{yesterday\_rate}^i$$

where, $\text{score}_{new}^i$ represents a new malicious action value of the malicious action i, $\text{score}_{old}^i$ represents the existing malicious action value of the malicious action i, $\text{rate}^i$ represents the rate of change of the malicious action i" $\text{IsBlack}_{today\_rate}^i$ represents the percentage of malicious action of the malicious action i recorded currently, $\text{IsBlack}_{yesterday\_rate}^i$ represents the percentage of malicious action of the malicious action i recorded previously.

10. The server according to any one of claims 7 to 9, wherein the determination unit is configured to determine that the program is a malicious program when any of the malicious action values of the program is greater than the high-risk threshold; and

determining that the program is a malicious program when no malicious action value of the program is greater than the high-risk threshold, but the sum of the malicious action values of all the malicious actions of the program is greater than a total malicious threshold.

Fig. 1

100 — Acquiring a malicious action set according to the sample data stored locally (optionally)

101 — Acquiring action data of a program at a client

102 — Acquiring a malicious action and a malicious action value of the program according to the action data of the program and the sample data stored locally

103 — Determining a malicious attribute of the program according to the malicious action and/or malicious action value of the program

Fig. 2

```
┌─────────────────────────┐
│    Acquiring a program   │
│     executable file      │
└─────────────────────────┘
              │
              ▼
         ╱Determining╲          yes    ┌─────────────────────────┐
        ╱ whether the file is a ╲──────▶│   Returning to the client │
        ╲   malicious file      ╱       │   that the program is a   │
         ╲                     ╱        │    malicious program      │
              │                         └─────────────────────────┘
              │ no
              ▼
         ╱Determining╲               yes   ┌─────────────────────────┐
        ╱ whether there is an obvious╲────▶│   Returning to the client │
        ╲   malicious action        ╱      │   that the program is a   │
         ╲                         ╱       │    malicious program      │
              │                            └─────────────────────────┘
              │ no
              ▼
         ╱Determining╲                no   ┌─────────────────────────┐
        ╱ whether there is a normal   ╲───▶│   Returning to the client │
        ╲   malicious action         ╱     │   that the program is a   │
         ╲                          ╱      │  non-malicious program    │
              │                            └─────────────────────────┘
              │ yes
              ▼
         ╱Determining╲                yes  ┌─────────────────────────┐
        ╱ whether a total malicious   ╲───▶│   Returning to the client │
        ╲   threshold has been       ╱     │   that the program is a   │
         ╲     exceeded             ╱      │    malicious program      │
              │                            └─────────────────────────┘
              ▼
┌─────────────────────────────┐
│ Returning to the client that the │
│   program is a non-malicious    │
│            program              │
└─────────────────────────────┘
```

Fig. 3

3

### Server for discriminating a malicious attribute of a program

| 30 | 32 | 34 |
|---|---|---|
| Customer data acquisition unit | Action data acquisition unit | Determination unit |

Fig.4

3

### Server for discriminating a malicious attribute of a program

| 30 | 32 | 34 |
|---|---|---|
| Customer data acquisition unit | Action data acquisition unit | Determination unit |

| 36 | 38 |
|---|---|
| Judgment unit | New malicious value acquisition unit |

# INTERNATIONAL SEARCH REPORT

International application No.

**PCT/CN2012/076594**

### A. CLASSIFICATION OF SUBJECT MATTER

G06F 21/00 (2006.01) i

According to International Patent Classification (IPC) or to both national classification and IPC

### B. FIELDS SEARCHED

Minimum documentation searched (classification system followed by classification symbols)

IPC: G06F 21/-

Documentation searched other than minimum documentation to the extent that such documents are included in the fields searched

Electronic data base consulted during the international search (name of data base and, where practicable, search terms used)

CNPAT; CNKI; WPI; EPODOC: antivirus, searching and killing, distinguish, virus, malicious, software, program, programme, black list, white list, sample, set, behavior, cloud, judg+

### C. DOCUMENTS CONSIDERED TO BE RELEVANT

| Category* | Citation of document, with indication, where appropriate, of the relevant passages | Relevant to claim No. |
|---|---|---|
| Y | CN 101593253 A (HUAWEI SYMANTEC TECHNOLOGIES CO., LTD. et al.), 02 December 2009 (02.12.2009), see claims 1-4 and 7-8, and figures 1-2 and 4-5 | 1-2, 7 |
| Y | CN 101923617 A (QIZHI SOFTWARE (BEIJING) CO., LTD.), 22 December 2010 (22.12.2010), see claim 1 | 1-2, 7 |
| A | CN 101388056 A (HUAWEI SYMANTEC TECHNOLOGIES CO., LTD.), 18 March 2009 (18.03.2009), see the whole document | 1-10 |

| ☐ Further documents are listed in the continuation of Box C. | ☒ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 17 July 2012 (17.07.2012) | **16 August 2012 (16.08.2012)** |

| Name and mailing address of the ISA/CN:<br>State Intellectual Property Office of the P. R. China<br>No. 6, Xitucheng Road, Jimenqiao<br>Haidian District, Beijing 100088, China<br>Facsimile No.: (86-10) 62019451 | Authorized officer<br><br>**LI, Xinyu**<br><br>Telephone No.: (86-10) **62411824** |
|---|---|

Form PCT/ISA/210 (second sheet) (July 2009)

## INTERNATIONAL SEARCH REPORT
### Information on patent family members

International application No.

**PCT/CN2012/076594**

| Patent Documents referred in the Report | Publication Date | Patent Family | Publication Date |
|---|---|---|---|
| CN 101593253 A | 02.12.2009 | CN 101593253 B | 04.04.2012 |
| CN 101923617 A | 22.12.2010 | None | |
| CN 101388056 A | 18.03.2009 | CN 101388056 B | 02.06.2010 |

Form PCT/ISA/210 (patent family annex) (July 2009)

**REFERENCES CITED IN THE DESCRIPTION**

**Patent documents cited in the description**

• CN 2011102431215